Europäisches Patentamt

(19) European Patent Office

Office européen des brevets

(11) Numéro de publication : **0 109 332**
**B1**

(12) **FASCICULE DE BREVET EUROPÉEN**

(45) Date de publication du fascicule du brevet :
06.05.87

(21) Numéro de dépôt : 83402126.3

(22) Date de dépôt : 28.10.83

(51) Int. Cl.⁴ : **H 04 L 25/49**, H 04 L  7/10

(54) **Appareil pour la réception de messages radio à signaux de type biphase.**

(30) Priorité : 29.10.82 FR 8218280

(43) Date de publication de la demande :
23.05.84 Bulletin 84/21

(45) Mention de la délivrance du brevet :
06.05.87 Bulletin 87/19

(84) Etats contractants désignés :
BE DE GB IT LU NL

(56) Documents cités :
WO-A-82 /029 85
FR-A- 2 281 675
US-A- 3 766 315
US-A- 3 806 816
PROCEEDINGS OF 30th ANNUAL CONFERENCE OF
THE IEEE VEHICULAR TECHNOLOGY SOCIETY,
INTERNATIONAL CONFERENCE ON TRANSPORTA-
TION ELECTRONICS, 15-17 septembre 1980, Dearborn, Michigan, IEEE cat. no. 80CH1601-4, pages 1-
8(E-25), Bohn Printing Company, New York, US R.M.
FULLER et al.: "Overview of an A.M.P.S. mobile call
processing system"

(73) Titulaire : **ELECTRONIQUE SERGE DASSAULT**
**80, avenue Marceau**
**F-75008 PARIS (FR)**

(72) Inventeur : **Bitsch, François**
**12, allée des Normandes**
**F-78112 Fourqueux (FR)**

(74) Mandataire : **Plaçais, Jean-Yves et al**
**Cabinet Netter 40, rue Vignon**
**F-75009 Paris (FR)**

### Description

L'invention concerne un appareil pour la réception de messages radio constitués par une succession de signaux « digitaux » comme ceux utilisés pour la transmission entre des balises, sur le sol ou en mer, et un ou des satellites terrestres de surveillance, par exemple pour contribuer au sauvetage de personnes en péril.

En raison de la grandeur de l'aire surveillée par un satellite, celui-ci doit pouvoir recevoir des messages émanant de plusieurs balises et qui lui parviennent de manière aléatoire. D'autre part, la fréquence des signaux ou bits constitutifs des messages émis par une balise varie au cours du temps, ainsi d'ailleurs que leur fréquence porteuse.

Le contenu d'un message peut varier, notamment d'un message émis par une balise à un message émis par une autre balise. La détection de la phase en est rendue plus difficile.

On a proposé de munir le récepteur au satellite d'une horloge fournissant les signaux de référence requis pour la détection de phase et la lecture du message digital, et de synchroniser à l'aide d'une boucle d'asservissement ladite horloge à partir des bits reçus, s'affranchissant ainsi de la variation de fréquence desdits bits, et également d'inclure dans un message, au début de celui-ci, des bits de configuration déterminée, ou préambule, le plus simplement une succession de « 0 » ou une succession de « 1 », exploitée au satellite précisément pour l'accrochage du message reçu. Il y a intérêt à ce que la durée du préambule soit la plus courte possible pour que la durée de la partie significative du message soit la plus longue.

Pour obtenir un récepteur qui, simultanément, soit peu sensible au contenu du message, en particulier conserve un gain de boucle satisfaisant quel que soit ledit contenu et, simultanément, satisfasse la condition souhaitée de courte durée d'acquisition, malgré l'étroitesse relative de la bande passante de la boucle, la Demanderesse a proposé d'associer au synchronisateur proprement dit une boucle annexe d'un type classique fonctionnant uniquement pendant la durée de l'acquisition, c'est-à-dire à la réception de la partie initiale du message consacrée à l'accrochage (FR 2 281 675). Le Brevet US 3 806 816 décrit un autre montage à plusieurs boucles.

La présente invention a pour objet un récepteur du type ci-dessus défini ne faisant pas appel à cette boucle supplémentaire, qui est ainsi d'une constitution plus simple et plus économique tout en assurant une synchronisation aux divers stades de fonctionnement dans des conditions au moins équivalentes à celles des appareils antérieurement connus.

L'invention a donc pour objet un appareil pour la réception de messages radio du type biphase constitués de bits « 0 » ou « 1 » et contenant un préambule constitué par une succession de bits de même type, ledit appareil comprenant une voie pour la détection des bits d'entrée et, en parallèle, une voie pour la synchronisation de signaux d'horloge de référence à partir des bits d'entrée, cette seconde voie comprenant une boucle d'asservissement à tension d'erreur, caractérisé en ce que la boucle d'asservissement est opératoire dans un premier état pour la condition de réception du préambule du message où les bits incidents sont de même type, et dans un second état pour la condition de réception de la partie significative du message où les bits incidents sont des deux types et en ce que, dans son second état, la boucle est modifiée suivant le type du bit incident, grâce à des moyens propres à inverser la tension d'erreur fournie par la boucle d'asservissement sous la commande d'un signal fourni par la voie de détection.

Dans la description qui suit, faite à titre d'exemple, on se réfère aux dessins annexés, dans lesquels :

la figure 1 est un schéma relatif à une première forme de réalisation ;

les figures 2-1 à 2-5 sont des diagrammes ;

la figure 3 est un diagramme de fonctionnement d'un comparateur de phase ;

la figure 4 est analogue à la figure 1, mais pour une variante.

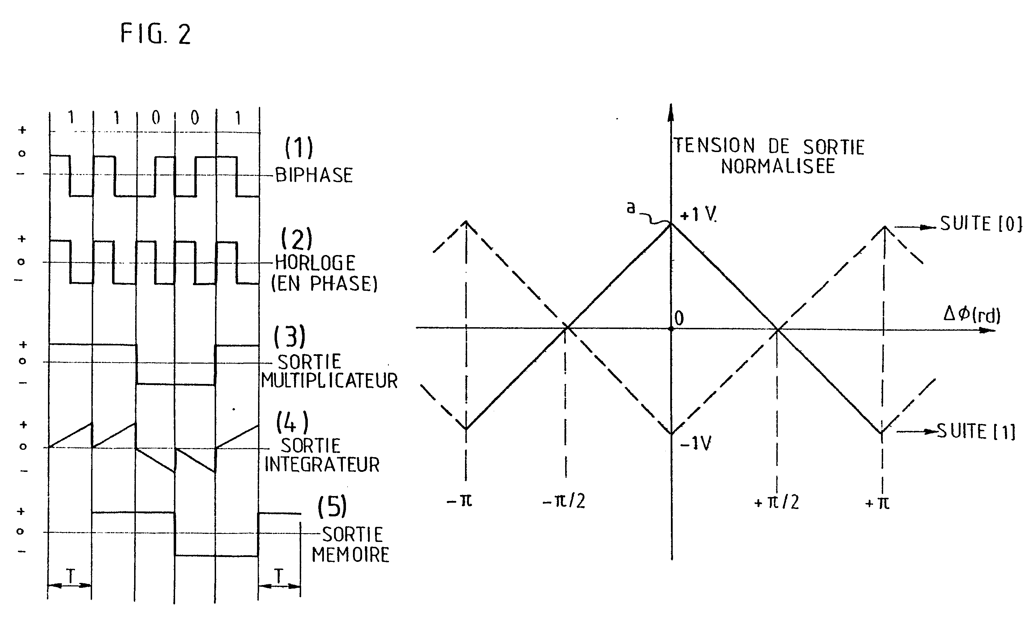

Le message radio reçu au satellite est appliqué par l'entrée 31 à l'appareil selon l'invention. Le message est par exemple du type biphase, c'est-à-dire constitué par une succession de bits « 0 » et de bits « 1 » comme montrés sur la figure 2-1, dans un ordre significatif du contenu du message. Bien entendu, la plupart du temps, le message est affecté de bruit.

Le message comprend une première partie, ou partie d'acquisition, constituée par une succession de bits identiques qui, dans une spécification, sont des bits « 1 », au nombre de quinze, formant le préambule d'un message où les bits se succèdent à la fréquence de 400 Hz.

L'entrée 31 se divise suivant deux branches 32 et 33, la branche 32 étant l'entrée d'un détecteur de bits 34 et la branche 33 l'entrée d'un synchronisateur 35.

Le détecteur de bits 34 comprend un corrélateur 36 constitué par un multiplicateur 37 dont une entrée 38 est l'extrémité de la voie 32 et dont l'autre entrée 39 lui applique des signaux de référence. Le multiplicateur 37 est relié par un circuit 41 à un intégrateur 42, dont le fonctionnement est contrôlé par une logique de commande 44 de manière à réaliser une intégration entre le temps 0 et le temps T, T étant la période des signaux de référence.

L'intégrateur 42 est relié par un circuit 45 à une mémoire 46, qui peut être remise à zéro par un circuit 47 issu de la logique de commande 44. La sortie 48 de la mémoire 46 se divise suivant une première voie 49 constituant l'entrée d'un dispositif de prise décision 51 et une seconde voie 52. Le dispositif de prise décision 51 fournit à sa sortie 53 une tension positive ou négative suivant qu'à son entrée 49 est appliqué un « 1 » ou un « 0 ». Le circuit 53 est relié par un dispositif d'interface 55 à la sortie 54 allant au reste de l'installation. La voie 52 aboutit à l'entrée 56 d'un second intégrateur 57 commandé d'autre part pour sa remise à zéro par une seconde entrée 58 reliée à la gestion générale de l'installation et qui intervient lorsque celle-ci est propre à recevoir l'onde porteuse du message. L'intégrateur 57 est relié par un circuit 59 à un second dispositif de prise décision 61, à une seconde entrée 62 duquel est appliquée une tension d'une valeur prédéterminée, un signal de décision étant fourni à la sortie 63 du dispositif 61 si la tension à l'entrée 59 est supérieure à ladite valeur. La sortie 63 est reliée à un dispositif de verrou 64 avec une entrée de remise à zéro 113, par l'intermédiaire d'un interface 65, la sortie 66 du dispositif de verrou 64 se divisant suivant une première voie 67 et une seconde voie 68. La voie 67 est reliée à la gestion générale et introduit dans celle-ci ledit signal, ou status.

La voie 68 applique le status à une première entrée 71 d'une porte ET 72 dont l'autre entrée 73 est reliée à la sortie 74 d'un inverseur logique 75 dont l'entrée 76 est reliée à la voie 54. La sortie 77 de la porte ET 72 commande un commutateur 78, dont la condition est schématisée par un contact mobile 79 propre à coopérer ou bien avec un premier contact fixe 81 ou bien un second contact fixe 82. Les contacts 81 et 82 font partie d'une boucle d'asservissement 83, le contact 81 étant relié directement à la sortie 84 d'une mémoire 85 faisant partie de la boucle tandis que le contact 82 est relié à ladite sortie 84 par un dispositif inverseur de tension 86, comprenant un amplificateur 87 et deux résistances 88 et 89.

La mémoire 85 est reliée par un circuit 91 à un intégrateur 92 dont la durée d'intégration est égale à T, sous l'effet de commande d'un circuit 93 issu de la logique de commande 44. L'intégrateur 92 reçoit les signaux issus d'un multiplicateur 94 dont une entrée 95 fait partie de la branche 33, qui applique ainsi au multiplicateur 94 les bits reçus, et dont l'autre entrée 96 reçoit des signaux de référence, par sa liaison à la sortie 97 de la logique de commande 44, dont des circuits font partie de la boucle d'asservissement 83.

L'entrée 39 applique au premier multiplicateur 37 des signaux de référence par sa liaison à la logique de commande 44 par un circuit 98, lequel comprend un dispositif 99 de décalage de phase de π/2.

La boucle d'asservissement 83 comprend une troisième mémoire 101 dont une entrée 102 est reliée au commutateur 78 et dont une autre entrée 103 est reliée à la logique de commande 44 par un circuit 104. La mémoire 101 est suivie, dans la boucle, par un filtre de boucle 105, dont la sortie 106 commande, par la valeur de la tension qu'elle lui applique, ou tension d'erreur, la fréquence des oscillations fournies par un oscillateur OCT 107 relié à la logique de commande 44 faisant partie de la boucle par un circuit 108.

Le fonctionnement est le suivant :

Lorsque les signaux de référence ou signaux d'horloge fournis au multiplicateur 37 à son entrée 39 sont en phase avec les bits reçus (sur lesquels, pour la clarté de la représentation, on n'a pas fait figurer le bruit) à l'entrée 38, la condition est celle qui est représentée sur la figure 2.1. pour les bits reçus, dans l'exemple constitué par la succession 1,1,0,0,1 et pour les signaux de référence sur la figure 2.2. Le signal présent à la sortie 41 du multiplicateur 37 est alors montré par le diagramme de la figure 2.3 : une tension positive correspond à un bit « 1 » du message et une tension négative correspond à un bit « 0 » du message. Le signal présent à la sortie 45 de l'intégrateur 42 est représenté par le diagramme de la figure 2.4, la remise à zéro de l'intégrateur étant obtenue par l'application à l'entrée 43 des signaux de référence mais décalés en phase de − π/2 par rapport aux signaux appliqués à l'entrée 39. On obtient à la sortie 48 de la mémoire 46 un signal représentatif des bits d'entrée, mais décalés d'une période T par rapport à ceux-ci, une tension positive pendant une période T étant représentative du bit « 1 » et une tension négative pendant une période T étant représentative du bit « 0 », comme montré sur la figure 2.5, cette tension étant d'une part appliquée par l'intermédiaire du dispositif de prise de décision 51 au reste de l'installation par la sortie 54 et à l'inverseur logique 75, à l'entrée 76 de ce dernier.

Le signal représenté sur la figure 2.5 est celui qui est appliqué à l'entrée 56 de l'intégrateur 57. La tension présente à la sortie 59 de l'intégrateur 57 augmente progressivement dans le cas où le signal appliqué à son entrée 56 est de même polarité, par exemple pendant la phase d'acquisition où les bits à l'entrée de l'appareil sont tous des bits « 1 ». Lorsque la tension à la sortie 59 de l'intégrateur 57 atteint celle de la valeur prédéterminée appliquée à l'entrée 62 du dispositif de prise de décision 61, un signal apparaît à la sortie 63, auquel correspond, après adaptation par l'interface 65, un signal ou « status » d'accrochage à la sortie 66 du verrou 64 et qui est présent sur la voie 67 et sur la voie 68.

Les bits parvenant à l'entrée 31 sont en outre appliqués par l'entrée 95 à la boucle d'asservissement 83, qui fait apparaître, par l'intervention du comparateur de phase constitué par le multiplicateur 94, l'intégrateur 92 et la mémoire 85, une tension d'erreur commandant l'oscillateur 107 de façon à assurer la synchronisation des signaux d'horloge, fournis à la sortie 97 de la boucle, avec les bits d'entrée.

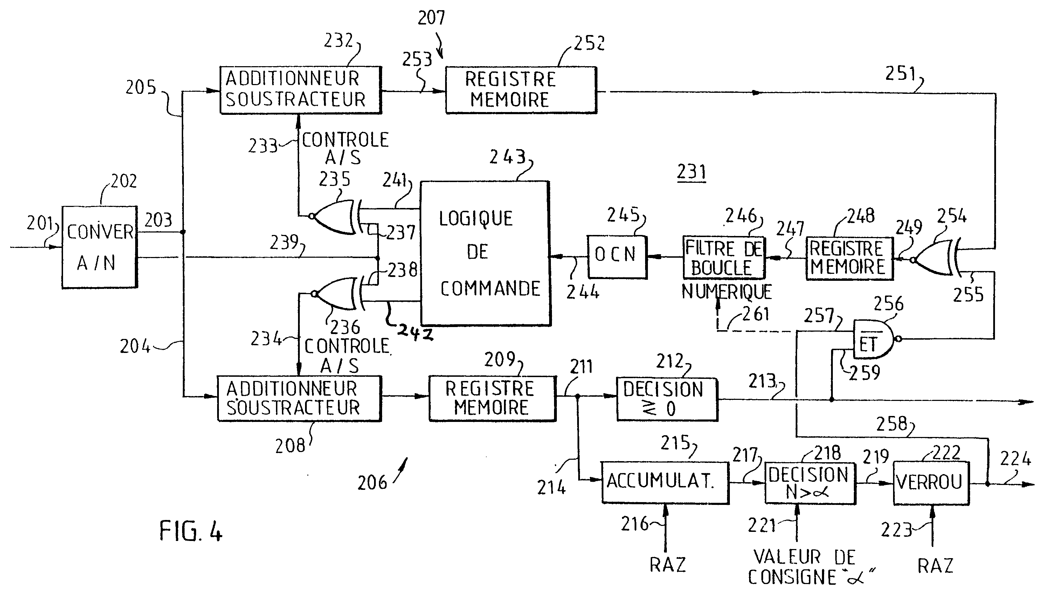

A la réception, à l'entrée 31, de bits « 1 », notamment pendant la phase d'acquisition ou préambule, le diagramme de fonctionnement du comparateur de phase est celui représenté en trait plein sur la figure 3, où on a porté en ordonnées la tension V à la sortie 84 du dispositif de mémoire 85 et en abscisses le décalage de phase ΔΦ entre les bits à l'entrée 31 et les signaux d'horloge. Lorsqu'il y a synchronisation, la tension à la sortie 84 est représentée par le point a,

par exemple à + 1 volt. Cette tension diminue suivant une loi linéaire pour un décalage en phase dans un sens ou dans l'autre, pour atteindre la valeur 0 lorsque le décalage est égal à $+\pi/2$ ou $-\pi/2$. Lorsque le décalage en phase augmente, la tension V devient négative, pour atteindre la valeur $-1$ volt pour un décalage égal à $\pm\pi$.

La ligne en trait pointillé est un diagramme analogue, mais lorsque les signaux parvenant à l'entrée 31 sont des bits 0.

Par un comparateur de phase comprenant le multiplicateur 94, l'intégrateur 92 et le dispositif de mémoire 85 faisant partie d'une boucle d'asservissement classique, on peut ainsi, par utilisation de bits identiques au cours de la phase d'acquisition, ou préambule, obtenir le décalage de phase des signaux de référence dans le sens qui les amène en phase avec les bits reçus, la boucle d'asservissement conservant ensuite ce calage en phase. On obtient ainsi, par le détecteur 34, une détection cohérente des signaux reçus.

Le fonctionnement de la boucle d'asservissement, compte tenu des propriétés du comparateur de phase utilisé, tend aussi à réduire la tension d'erreur à zéro et, par conséquent, faire fonctionner le comparateur de phase autour de son point zéro, donc à 90° par rapport aux bits d'entrée.

Il est ainsi possible d'utiliser l'ensemble constitué par le corrélateur 94, 92 et la mémoire 85 comme comparateur de phase du synchronisateur. A l'aide d'un préambule de message constitué par une succession de bits de valeur « 1 », par exemple, il est possible d'accrocher la boucle 83 sur le signal sans ambiguïté de phase.

Les perturbations résiduelles à la cadence des bits sont très faibles, théoriquement nulles, ce qui autorise l'utilisation d'une bande passante suffisamment large pour acquérir la phase du signal reçu en moins de 15 bits d'une fréquence de 400 Hz.

Le synchronisateur 35 fonctionne ainsi comme une boucle de phase « échantillonnée » classique, lorsque le commutateur 78 est dans la condition représentée, ce qui est le cas notamment au cours du préambule d'accrochage.

Lorsque le status d'accrochage apparaît à la sortie 66 du verrou 64, la porte ET 72 en est rendue opératoire par son application sur l'entrée 71, ce qui traduit le fait que l'appareil est propre à recevoir la partie significative du message. Dans cette partie, aussi longtemps que ce sont des bits « 1 » qui sont appliqués à l'entrée 31 de l'appareil, la condition de la boucle d'asservissement 83 n'est pas modifiée. Mais quand c'est un bit « 0 » qui parvient à l'entrée 31, un signal est en outre appliqué à l'entrée 73, par l'intermédiaire de l'inverseur logique 75, et le commutateur 78 fait intervenir dans la boucle d'asservissement l'inverseur de tension 86. La boucle d'asservissement 83 continue à fonctionner d'une manière satisfaisante pour maintenir le calage en phase des signaux d'horloge introduits dans le multiplicateur 37 avec les bits d'entrée.

La mémoire 101, qui joue le rôle d'une ligne à retard, prend en compte l'information d'erreur après que la commutation a été effectuée, ce qui évite des perturbations transitoires dans la boucle.

L'invention prévoit de réduire la largeur de la bande passante de la boucle 83 dans la « poursuite », c'est-à-dire au cours du traitement de la partie significative du message, ce qui est avantageux pour le traitement de bits d'entrée présentant un rapport signal/bruit extrêmement faible.

On a schématisé la commutation permettant de faire varier la bande passante de la boucle de réaction 83 par le circuit 111 provenant de la sortie 66 du verrou 64 et aboutissant à l'entrée 112 du filtre de boucle 105, comprenant un circuit d'entrée de remise à zéro 113.

Les performances de l'appareil sont compatibles avec les spécifications suivantes :
— probabilité d'accrochage $\geqslant 0,999$ pour un temps d'acquisition correspondant à 15 bits à une fréquence de 400 Hz et

$$E/N_0 \geqslant 12,5 \text{ dB}$$

E étant l'énergie transportée par un signal, et $N_0$ la densité spectrale du bruit.

La probabilité d'erreur de bit est meilleure que $10^{-5}$ dans les conditions définies ci-dessus.

On a représenté sur la figure 4 un schéma d'un appareil selon l'invention pour une réalisation numérique. Dans cette variante, l'entrée 201 des signaux biphase (entachés de bruit) est appliquée à un convertisseur analogique/numérique 202 dont la sortie 203 se divise en deux voies 204 et 205 transmettant l'information de valeur absolue des signaux. La ligne 204 est l'entrée d'une voie 206 comprenant le détecteur de bits et la ligne 205 est l'entrée d'une voie 207 comprenant le synchronisateur. La voie 206, comprend un additionneur-soustracteur 208 suivi d'un registre-mémoire 209 dont la sortie 211 est reliée, d'une part, à un dispositif de prise de décision 212 fournissant à sa sortie 213 l'information $> 0$ ou l'information $< 0$ suivant le type de bit reçu. Le registre mémoire 209 est également relié à l'entrée 214 d'un accumulateur 215 avec entrée de remise à zéro 216. La sortie 217 de l'accumulateur 215 est reliée à un dispositif de prise de décision 218 faisant apparaître un signal de décision à sa sortie 219 lorsque :

$$N \geqslant \alpha$$

N étant la densité spectrale du bruit la valeur de consigne $\alpha$ étant introduite par l'entrée 221.

L'apparition d'un signal à la sortie 219 déclenche le fonctionnement d'un verrou 222 ayant une entrée de remise à zéro 223, la sortie 224 du verrou constituant le status d'accrochage.

La voie 207 fait partie d'une boucle d'asservissement 231 qui comprend un additionneur-soustracteur 232 contrôlé par une seconde entrée 233, l'additionneur soustracteur 208 de la voie 206 étant de même contrôlé par une entrée 234, les entrées 233 et 234 étant reliées aux sorties de portes OU exclusif 235 et 236 respectivement, dont deux premières entrées 237 et 238 sont reliées au circuit 239, issu du convertisseur analogique/numérique 202 et transportant le signe. Les autres entrées des portes 235 et 236 sont reliées par des circuits 241 et 242 à une logique de commande 243, un décalage en phase de π/2 existant entre les signaux délivrés auxdites sorties, de sorte que les phases de calage respectivement sur les voies 206 et 207 diffèrent entre elles de π/2.

La logique de commande 243 fait partie de la boucle d'asservissement 231. Elle est reliée à la sortie 244 d'un oscillateur à commande numérique OCN 245, lequel est contrôlé à partir d'un filtre de boucle numérique 246 recevant par un circuit 247 l'information issue d'un registre-mémoire 248. Celui-ci reçoit à son extrémité 249 une information d'erreur de phase présente dans un circuit 251 issu d'un registre-mémoire 252, dont l'entrée 253 est reliée à l'additionneur-soustracteur 232. L'information d'erreur de phase présente sur le circuit 251 est appliquée à l'entrée d'une porte OU exclusif 254 dont l'autre entrée 255 est reliée à la sortie d'une porte ET 256 dont une entrée 257 est reliée par un circuit 258 à la sortie 224 du dispositif de verrou 222 et dont l'autre entrée 259 est reliée à la sortie 213 du dispositif 212 de prise de décision. Un circuit 261, relié par le circuit 258 à la sortie 224 du dispositif de verrou 222, permet, par l'intervention du filtre de boucle 246, la commutation de la bande passante de la boucle 231.

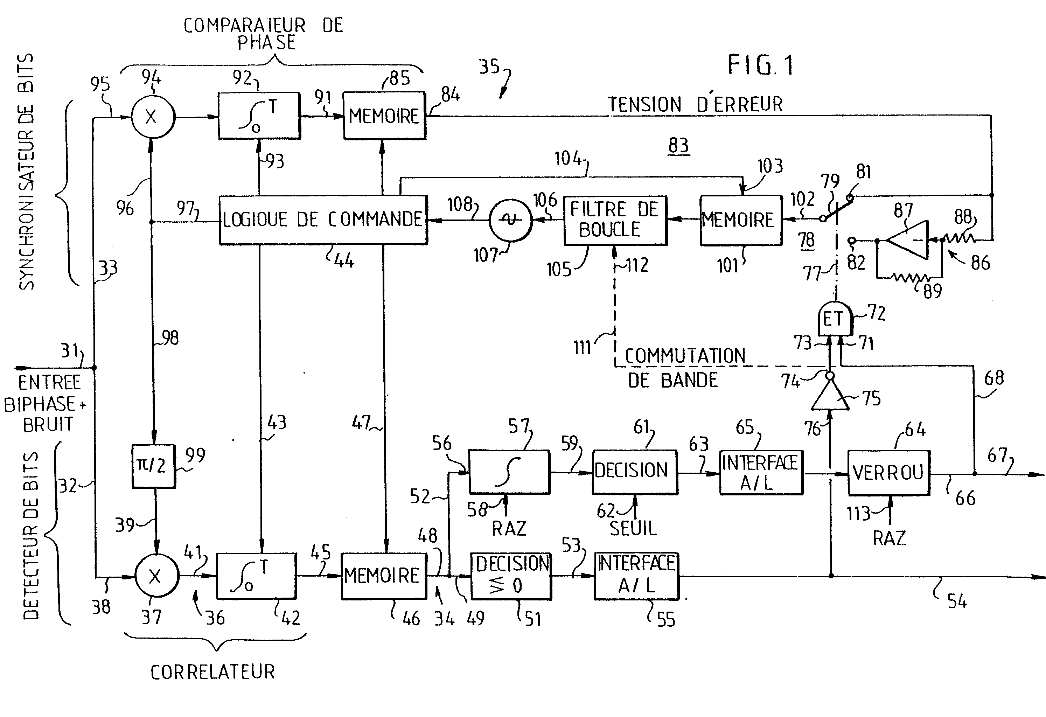

Le fonctionnement de cette forme de réalisation est analogue à celui de la forme de réalisation représentée sur la figure 1.

Sur la figure 2.1 on a représenté des signaux d'entrée à configuration rectangulaire, mais l'invention s'applique également à des signaux de configuration différente, par exemple arrondie, comme des signaux biphase pré-filtrés.

## Revendications

1. Appareil pour la réception de messages radio du type biphase constitués de bits 0 ou 1 et contenant un préambule constitué par une succession de bits de même type, ledit appareil comprenant une voie (34 ; 206) pour la détection des bits d'entrée et, en parallèle, une voie (35 ; 207) pour la synchronisation de signaux d'horloge de référence (107 ; 245) à partir des bits d'entrée, cette seconde voie comprenant une boucle d'asservissement (83 ; 231) à tension d'erreur, caractérisé en ce que la boucle d'asservissement (83 ; 231) est opératoire dans un premier état pour la condition de réception du préambule du message où les bits incidents sont de même type, et dans un second état pour la condition de réception de la partie significative du message où les bits incidents sont des deux types et en ce que, dans son second état, la boucle est modifiée suivant le type du bit incident, grâce à des moyens (75, 72, 77, 78, 86 ; 256, 254) propres à inverser la tension d'erreur fournie par la boucle d'asservissement sous la commande d'un signal fourni par la voie de détection (34 ; 206).

2. Appareil selon la revendication 1, pour le traitement de messages comprenant un préambule constitué de bits de même type, par exemple de bits « 1 », caractérisé en ce qu'il comprend des moyens (57, 61, 65, 64 ; 215, 218, 222) pour contrôler la possibilité de commutation de la condition de la boucle d'asservissement (83 ; 231) à partir de la voie de détection (34 ; 206) et en fonction de la bonne réception des bits de préambule.

3. Appareil selon la revendication 1, caractérisé en ce que les signaux d'horloge de référence fournis à partir d'un oscillateur (107 ; 245) contrôlé en tension appartenant à la boucle (83 ; 231) sont appliqués sur la voie de synchronisation (35 ; 207) et la voie de détection (34 ; 206) avec un décalage de π/2 entre les voies (99 ; 243 ; 235 ; 236).

4. Appareil selon l'une quelconque des revendications 1 à 3, caractérisé en ce que la boucle est de type analogique (Fig. 1).

5. Appareil selon l'une quelconque des revendications 1 à 3, caractérisé en ce que la boucle est de type numérique (Fig. 4).

6. Appareil selon l'une quelconque des revendications 1 à 4, dans lequel la boucle comprend un comparateur de phases entre une succession de bits biphase et une succession de signaux d'horloge rectangulaires, caractérisé en ce que le comparateur comprend un corrélateur constitué par un multiplicateur (94) dont les entrées reçoivent respectivement la succession de bits et la succession des signaux d'horloge, lequel est suivi d'un intégrateur (92) suivi lui-même d'une mémoire (85), la tension présente à la sortie de la mémoire étant représentable en fonction du déphasage par un diagramme triangulaire symétrique autour de 0 et ne présentant pas d'ambiguïté de phase dans l'intervalle (− π + π).

## Claims

1. Apparatus for receiving radio messages of the biphase type constitued by 0 or 1 bits and containing a preamble consisting of a succession of bits of the same type, the said apparatus comprising a channel (34 ; 206) for the detection of intake bits and, in parallel, a channel (35 ; 207) for synchronising reference clock signals (107, 245) on a basis of the inlet bits, this second channel comprising an error voltage control loop (83 ; 231), characterised in that the control loop (83 ; 231) is operative in a first state for the condition of receiving the preamble of the message in which the incident bits are of the same type, and in a second state for the condition of receiving the meaningful portion of the message in which the incident bits are of two types and in that, in its second state, the loop is modified according to the type of incident bit by virtue of means (75, 72, 77, 78, 86 ; 256, 254) adapted to reverse the error voltage supplied by the control loop under the command of a signal provided by the detection channel (34 ; 206).

2. Apparatus according to Claim 1 for processing messages comprising a preamble consisting of bits of the same type, for example « 1 » bits, characterised in that it comprises means (57, 61, 65, 64 ; 215, 218, 222) for monitoring the possibility of switching the condition of the control loop (83 ; 231) on a basis of the detection channel (34 ; 206) and as a function of satisfactory reception of the bits in the preamble.

3. Apparatus according to Claim 1, characterised in that the reference clock signals furnished by a controlled voltage oscillator (107 ; 245) which is part of the loop (83 ; 231) are applied to the synchronising channel (35 ; 207) and the detection channel (34 ; 206) with an offset of $\pi/2$ between the channels (99 ; 243 ; 235 ; 236).

4. Apparatus according to any one of Claims 1 to 3, characterised in that the loop is of the analogue type (Fig. 1).

5. Apparatus according to any one of Claims 1 to 3, characterised in that the loop is of the numerical type (Fig. 4).

6. Apparatus according to any one of Claims 1 to 4, in which the loop comprises a phase comparator between a succession of biphase bits and a succession of rectangular clock signals, characterised in that the comparator comprises a correlator consisting of a multiplier (94) of which the inputs respectively receive the succession of bits and the succession of clock signals, being followed by an integrator (92) which is itself followed by a memory (85), the voltage present at the output from the memory being representable as a function of the phase shift by a symmetrical triangular diagram about 0 and having no ambiguity of phase in the interval ($-\pi + \pi$).

**Patentansprüche**

1. Anordnung zum Empfangen von biphasenartigen Funksprüchen, die aus Bits 0 oder 1 bestehen und die eine Präambel, bestehend aus einer Aufeinanderfolge von Bits vom gleich Typ, enthalten, wobei die Anordnung einen Kanal (34 ; 206) zur Abtastung von Eingangsbits und parallel dazu einen Kanal (35 ; 207) zur Synchronisation von Referenztaktsignalen (107 ; 245) aus den Eingangsbits aufweist, wobei dieser zweite Kanal einen Regelkreis (83 ; 231) für Spannungsfehler aufweist, dadurch gekennzeichnet, daß der Regelkreis (83 ; 231) in einem ersten Zustand für den Empfang der Präambel der Nachricht, wo die Eingangsbits vom gleichen Typ sind, und in einem zweiten Zustand für den Empfang des signifikanten Teiles der Nachricht, wo die Eingangsbits von den beiden Arten sind, betriebsbereit ist, und daß der Regelkreis in seinem zweiten Zustand gemäß dem Typ der Eingangsbits mit geeigneten Mitteln (75, 72, 77, 78, 86 ; 256, 254) modifiziert wird, um die von dem Regelkreis gelieferte Fehlerspannung gesteuert durch ein vom Abtastkanal (35 ; 206) geliefertes Signal umzukehren.

2. Anordnung nach Anspruch 1, für die Verarbeitung von Nachrichten, die eine Präambel enthalten, welche aus Bits vom gleichen Typ besteht, beispielsweise aus « 1 »-Bits, dadurch gekennzeichnet, daß sie Mittel (57, 61, 64, 64 ; 215, 218, 222) aufweist, um die Möglichkeit der Kommutierung des Zustands des Regelkreises (83 ; 231) ausgehend vom Abtastsignal (34 ; 206) und in Abhängigkeit vom guten Empfang der Bits der Präambel zu steuern.

3. Anordnung nach Anspruch 1, dadurch gekennzeichnet, daß die Referenztaktsignale, die von einem Oszillator (107 ; 245) geliefert werden, der von einer zum Regelkreis (83 ; 231) gehörenden Spannung gesteuert ist, an den Synchronisationskanal (35 ; 207) und an den Abtastkanal (34 ; 206) mit einer Phasenverschiebung von $\pi/2$ zwischen den Kanälen (99 ; 243 ; 235 ; 236) angelegt werden.

4. Anordnung nach einem der Ansprüche 1 bis 3, dadurch gekennzeichnet, daß der Regelkreis vom analogen Typ ist (Fig. 1).

5. Anordnung nach einem der Ansprüche 1 bis 3, dadurch gekennzeichnet, daß der Regelkreis vom digitalen Typ ist (Fig. 4).

6. Anordnung nach einem der Ansprüche 1 bis 4, bei der der Regelkreis einen Komparator der Phasen zwischen einer Folge von Biphasen-Bits und einer Folge von rechteckigen Taktsignalen aufweist, dadurch gekennzeichnet, daß der Komparator einen Korrelator aufweist, bestehend aus einem Multiplizierer (94), dessen Eingänge jeweils die Folge der Bits und die Folge der Taktsignale empfangen, dem ein Integrator (92) nachgeschaltet ist, welchem seinerseits ein Speicher (85) nachgeschaltet ist, wobei die am Ausgangs des Speichers anliegende Spannung in Abhängigkeit von der Phasenverschiebung darstellbar ist mit einem Dreieck-Diagramm, das um den Nullpunkt symmetrisch ist und im Intervall ($-\pi + \pi$) keine Phasenmehrdeutigkeit besitzt.

FIG.1

TENSION D'ERREUR

COMPARATEUR DE PHASE

SYNCHRONISATEUR DE BITS

ENTREE BIPHASE + BRUIT

CORRELATEUR

DETECTEUR DE BITS

LOGIQUE DE COMMANDE

MEMOIRE

FILTRE DE BOUCLE

COMMUTATION DE BANDE

DECISION

INTERFACE A/L

VERROU

RAZ

SEUIL

DECISION $\geq 0$

INTERFACE A/L

$\pi/2$

$\int_0^T$

ET

# FIG. 2

(1) BIPHASE

(2) HORLOGE (EN PHASE)

(3) SORTIE MULTIPLICATEUR

(4) SORTIE INTEGRATEUR

(5) SORTIE MEMOIRE

TENSION DE SORTIE NORMALISEE

+1 V.

SUITE [0]

-1V

SUITE [1]

Δφ(rd)

−π   −π/2   +π/2   +π

0 109 332

FIG. 4